# EUROPEAN PATENT APPLICATION

(11) **EP 4 808 262 A1**
(43) Date of publication of application: **16.09.2026**
(21) Application number: 24888621.0
(22) Date of filing: 31.10.2024
(51) Int. Cl.: H04W 76/15, H04W 36/18, H04W 84/12

(54) **COMMUNICATION DEVICE, CONTROL METHOD, AND PROGRAM**

(30) Priority: 08.11.2023 JP 2023191187
(71) Applicant: Canon Kabushiki Kaisha, Tokyo 146-8501 (JP)
(72) Inventor: SOMA Tomoyasu, Tokyo 146-8501 (JP)
(74) Representative: Canon Europe Limited
(86) International application number: PCT/JP2024/038812
(87) International publication number: WO 2025/100324

(57) **Abstract**

This communication device is a Multi-Link Device capable of establishing multiple parallel links with another communication device via respectively different frequency channels. The communication device communicates a prescribed wireless frame with a different first Multi-Link Device. The communication device establishes a link with the first Multi-Link Device. In the communication device, the prescribed wireless frame communicated by the communicating means includes a prescribed element that includes an identifier of a logical Multi-Link Device formed by cooperation between at least the first Multi-Link Device and a second Multi-Link Device different from the Multi-Link Device.

## Description

### Technical Field

The present invention relates to a communication device that communicates data.

### Background Art

The Institute of Electrical and Electronics Engineers (IEEE) 802.11 standards series are known to be major communication standards for wireless local area network (WLAN). The IEEE 802.11 standards series include standards such as IEEE 802.11a/b/g/n/ac/ax.

In addition, the IEEE 802.11be standard is being standardized as the successor to the IEEE 802.11ax standard. One of the new functions being considered in the IEEE 802.11be standard is Multi-Link communication, in which an Access Point (AP) and a Station (STA) communicate by establishing multiple parallel links via multiple respectively different frequency channels. A communication device capable of establishing multiple parallel links with another communication device via multiple respectively different frequency channels in this way is referred to as a Multi-Link Device (MLD). For example, PTL 1 describes a mechanism for establishing multiple links with another communication device for the purpose of Multi-Link communication.

### Citation List

### Patent Literature

PTL 1: Japanese Patent Laid-Open No. 2021-103805

### Summary of Invention

### Technical Problem

Furthermore, in the IEEE 802.11bn standard, which is the successor to the IEEE 802.11be standard, a configuration referred to as a Non-collocated AP MLD, which is formed by multiple AP MLDs operating jointly, is being considered. If multiple AP MLDs could be integrated and made to operate jointly in this way, a STA would be capable of roaming seamlessly across multiple AP MLDs. However, until now, no method has been devised to appropriately communicate information pertaining to a Non-collocated AP MLD.

In view of the above issue, the present invention is directed to enable the appropriate communication of information pertaining to a logical MLD formed by multiple MLDs cooperating with each other.

### Solution to Problem

To achieve the above, a communication device according to an aspect of the present invention is a Multi-Link Device capable of establishing multiple parallel links with another communication device via respectively different frequency channels. The communication device includes: a communicating means that communicates a prescribed wireless frame with a first Multi-Link Device different from the Multi-Link Device; and an establishing means that establishes a link with the first Multi-Link Device. The prescribed wireless frame communicated by the communicating means includes a prescribed element that includes an identifier of a logical Multi-Link Device formed by cooperation between at least the first Multi-Link Device and a second Multi-Link Device different from the Multi-Link Device.

### Advantageous Effects of Invention

According to one aspect of the present invention, information pertaining to a logical MLD formed by multiple MLDs cooperating with each other can be communicated appropriately.

### Brief Description of Drawings

[Fig. 1] Fig. 1 is a diagram illustrating an example of a configuration of a network in the present invention.
[Fig. 2] Fig. 2 is a diagram illustrating an example of an architecture for centrally controlling a logical AP MLD.
[Fig. 3] Fig. 3 is a diagram illustrating an example of a hardware configuration of a communication device in the present invention.
[Fig. 4] Fig. 4 is a diagram illustrating an example of a functional configuration of a communication device in the present invention.
[Fig. 5] Fig. 5 is a diagram illustrating an example of a connection sequence between a communication device 102 and a Non collocated AP MLD 104 in the present embodiment.
[Fig. 6] Fig. 6 is a diagram illustrating an example of a Non-collocated AP MLD Multi-Link Element in the present embodiment.
[Fig. 7] Fig. 7 is a flowchart illustrating a process to be executed in a non-AP MLD in the present embodiment.
[Fig. 8] Fig. 8 is a flowchart illustrating a process to be executed in an AP MLD in the present embodiment.

### Description of Embodiments

The following describes embodiments in detail with reference to the attached drawings. However, the following embodiments do not limit the invention as recited in the claims. Although multiple features are described in the embodiments, it is not necessarily the case that all of the features are essential to the invention, and moreover, multiple embodiments may be combined in any way. Furthermore, in the attached drawings, the same or similar portions of the configuration are denoted with the same reference signs, and duplicate description is omitted.

### (Network Configuration)

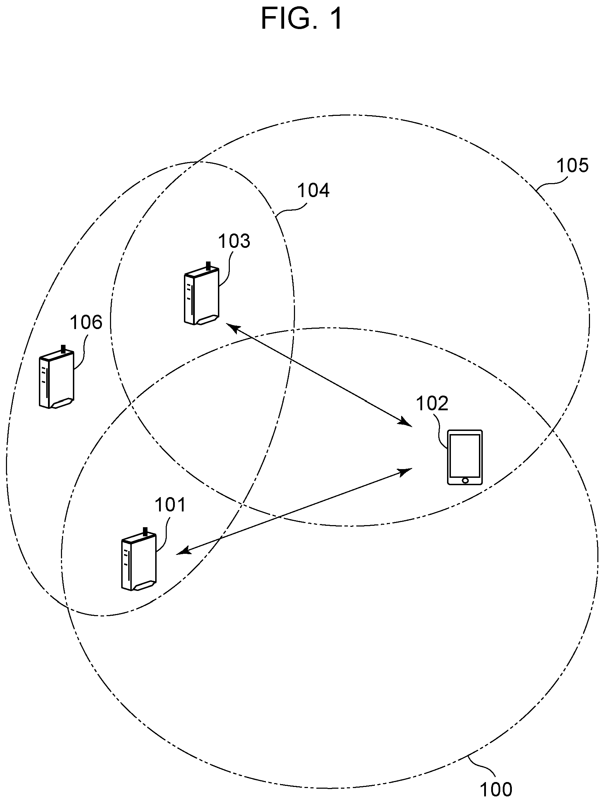

Fig. 1 illustrates an example of a configuration of a network according to the present embodiment. The present embodiment is formed from a communication device 101 capable of constructing a network 100, a communication device 103 capable of constructing a network 105, a communication device 102 capable of joining each network, and a communication device 106 capable of communicating with each of the communication device 101 and the communication device 103. Each communication device (communication device 101, 102, 103, 106) is configured to carry out communication of wireless frames in compliance with the IEEE 802.11bn standard, which is the successor standard to the IEEE 802.11be standard that targets a maximum transmission rate of 46.08 Gbps. Note that IEEE is an acronym for the Institute of Electrical and Electronics Engineers. The main features of IEEE 802.11bn, which is the successor standard to IEEE 802.11be, are high-reliability communication, low-latency communication, and improved throughput in times of congestion. Also, one of the stated goals of IEEE 802.11bn is to lower power consumption in APs. Wireless frames communicated under the successor standard are also referred to as Ultra High Reliability (UHR) PPDUs. PPDU is an acronym for PLCP Protocol Data Unit, and PLCP is an acronym for Physical Layer Convergence Protocol.

Note that the name UHR has been established for convenience based on the goals to be achieved in the successor standard and the features that will be the main focus of the standard, and may be referred to by a different name once the standard is finalized. The name IEEE 802.11bn similarly may be referred to by a different name once the standard is finalized. On the other hand, it should be understood that this specification and the appended claims are essentially applicable to all successor standards to the 802.11be standard. Each of the communication devices 101, 103, and 106 is an Ultra High Reliability access point multi-link device (UHR AP MLD; hereinafter also simply referred to as an AP MLD) supporting the IEEE 802.11 UHR standard. The communication device 102 is an Ultra High Reliability non-access point multi-link device (UHR non-AP MLD; hereinafter also simply referred to as a non-AP MLD) supporting the IEEE 802.11 UHR standard. The communication devices 101, 103, and 106, which are AP MLDs, include multiple access points (APs), and the communication device 102, which is a non-AP MLD, includes multiple non-access point stations (non-AP STAs; hereinafter also simply referred to as STAs). An AP MLD and a non-AP MLD can establish links between the APs and the STAs respectively provided therein, and thereby establish multiple parallel links via multiple respectively different frequency channels. A communication device capable of establishing multiple parallel links via multiple respectively different frequency channels in this way is referred to as a multi-link device (MLD). Also, in the present embodiment, the communication device 102, which is an MLD, is capable of establishing links with each of the communication device 101 and the communication device 103, and can maintain the links in parallel. The communication device 101 and the communication device 103 are located in physically different places, but form a Non-collocated AP MLD 104 due to being centrally controlled by the same Upper MAC (communication device 106). Note that MAC is an acronym for Medium Access Control. Details of the Non-collocated AP MLD (104) will be described later. Also, each communication device can execute wireless communication conforming to the IEEE 802.11 UHR standard.

Also, each communication device can communicate in microwave bands, including the 2.4 GHz band, the 5 GHz band, and the 6 GHz band, and in millimeter-wave bands exceeding 45 GHz, including the 60 GHz band. Each communication device can operate with a channel bandwidth of 20 MHz, 40 MHz, 80 MHz, 160 MHz, 320 MHz, 480 MHz, or 640 MHz in the microwave bands. Each communication device can operate with a channel bandwidth of 2.16 GHz, 4.32 GHz, 6.48 GHz, or 8.64 GHz in the millimeter-wave bands. Each communication device can furthermore operate at 2.16/n [GHz] (where n is a natural number equal to or greater than 2) or 20×m [MHz] (where m is a natural number) in the millimeter-wave bands. Notwithstanding the above, each communication device may also be capable of operating only in the millimeter-wave bands with a channel bandwidth of less than 2.16 GHz.

Note that each communication device supports the IEEE 802.11 UHR standard, but in addition, may also support IEEE 802.11 standards prior to the IEEE 802.11 UHR standard. Specifically, the communication devices 101 and 102 may also support at least one of the IEEE 802.11a/b/g/n/ac/ax/be standards.

In addition to the IEEE 802.11 standards series, each communication device may also support other communication standards, such as Bluetooth^{®}, NFC, UWB, ZigBee, and MBOA. Note that UWB is an acronym for ultra-wideband, and MBOA is an acronym for Multi Band OFDM Alliance. NFC is an acronym for near-field communication. UWB includes wireless USB, wireless 1394, WiNET, and the like. Each communication device may also support a communication standard for wired communication, such as wired LAN.

Specific examples of the communication devices 101, 103, and 106 include, but are not limited to, a wireless LAN router and a personal computer (PC).

The communication devices 101, 103, and 106 each may also be an information processing device such as a wireless chip that can carry out wireless communication conforming to the IEEE 802.11 UHR standard.

Specific examples of the communication device 102 include, but are not limited to, a camera, a tablet, a smartphone, a PC, a mobile phone, a video camera, and a headset. The communication device 102 may also be an information processing device such as a wireless chip that can execute wireless communication conforming to the IEEE 802.11 UHR standard.

### (Non-collocated AP MLD)

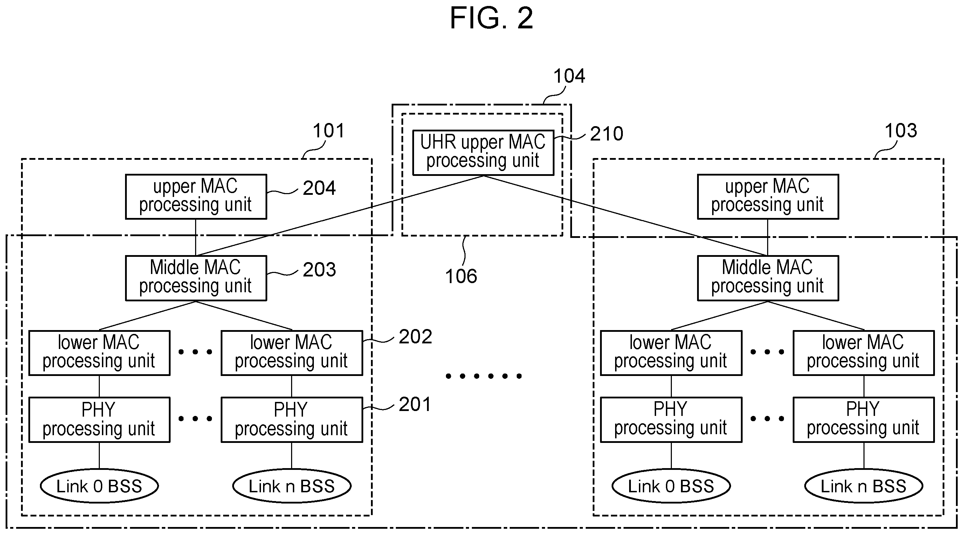

Fig. 2 illustrates an example of a Non-collocated AP MLD 104 in the present embodiment. In Fig. 2, the communication device 101, the communication device 103, and the communication device 106 cooperate to function logically as a single AP MLD. A Non-collocated AP MLD in the present embodiment refers to a single logical AP MLD that functions by inducing cooperation between a function as a lower MAC layer provided in multiple APs (communication devices 101, 103) and a function as an Upper MAC layer provided in a device (communication device 106) present outside the multiple APs. This means that two physically different APs are made to function as a single AP MLD from the perspective of a STA. Note that the present embodiment is provided with the communication device 106 having a function as the Upper MAC layer in the Non-collocated AP MLD, but is not limited thereto. For example, a configuration can also be adopted to achieve a logically single AP MLD by providing the function as the Upper MAC layer on a cloud server not illustrated, and inducing cooperation between the function operating on the cloud server and the function as a lower MAC layer provided by each AP. A logically single AP MLD may also be configured by having each AP cooperate to share a function as the Upper MAC layer of each AP.

Also, in Fig. 2, the configuration related to the Non-collocated AP MLD 104 within the configuration of each communication device is indicated by the chain line 104. Next, a configuration of each communication device forming the Non-collocated AP MLD 104 will be described.

The communication device 101 is an AP MLD. Therefore, the communication device 101 is provided with multiple Affiliated APs (APs) and is capable of simultaneously controlling a number of links equal to the number of APs. The communication device 101, which is an AP MLD in the present embodiment, is formed from multiple physical layer (PHY) processing units 201 respectively provided in the Affiliated APs, multiple lower MAC processing units 202 respectively provided in the Affiliated APs, a middle MAC processing unit 203, and an upper MAC processing unit 204. The PHY processing units 201 and the lower MAC processing units 202 process unique PHY layer and MAC layer information and carry out control in each respective Affiliated AP. The middle MAC processing unit 203 distributes transmission data as the AP MLD to each Affiliated AP on the basis of a TID To Link Mapping for example. Note that TID is an acronym for Traffic Identifier. The middle MAC processing unit 203 distributes received data to the upper MAC processing unit 204 or a UHR upper MAC 210 of the Non-collocated AP MLD provided in the communication device 106, on the basis of information about the received data. Note that in a case where the communication device 101 and the communication device 106 are connected wirelessly, the distribution of received data to the UHR upper MAC 210 is performed by retransmission to the communication device 106 via wireless communication via the PHY processing units 201. The upper MAC processing unit 204 carries out control of connection and authentication with another MLD as an AP MLD for example. Note that the communication device 103 in the present embodiment is assumed to have a configuration similar to that of the communication device 101 described above.

The communication device 106 is provided with at least the UHR upper MAC 210, which is capable of functioning as an upper MAC of the Non-collocated AP MLD 104. In Fig. 2, only the UHR upper MAC 210 is illustrated for reasons of space, but for example, the communication device 106 may also be provided with an AP MLD configuration similar to that of the communication device 101. The communication device 106 receives, from the communication device 101, wireless frames addressed to the Non-collocated AP MLD received by the communication device 101, and the UHR upper MAC 210 carries out control of connection and authentication as the Non-collocated AP MLD. Also, the UHR upper MAC 210 distributes transmission data as the Non-collocated AP MLD to each AP MLD. Also, the communication device 106 is connected to each AP MLD (communication devices 101, 103) described above in a wired or wireless manner, and by communicating through these connections, carries out joint operation as the Non-collocated AP MLD.

### (Hardware Configuration of Communication Device)

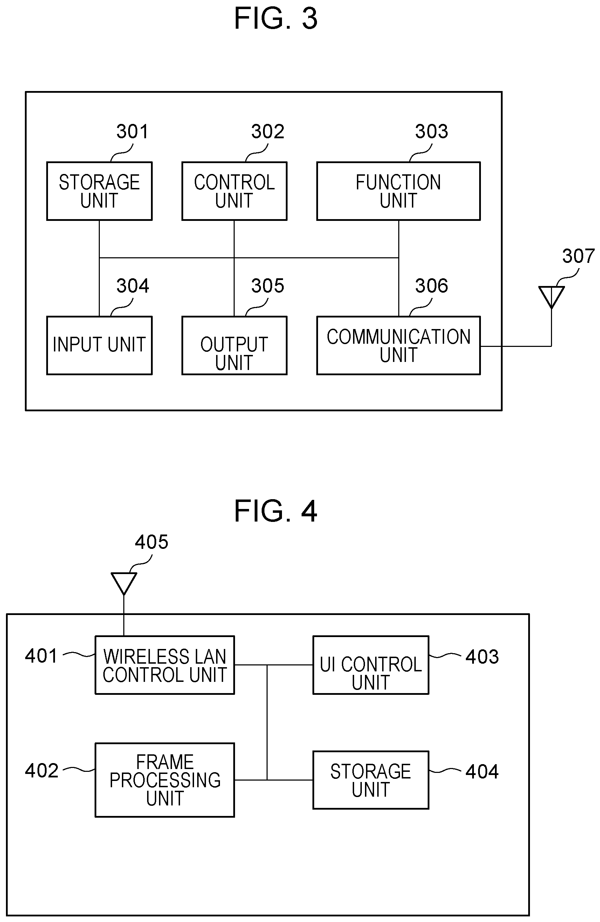

Fig. 3 illustrates an example of a hardware configuration of the communication device 101 in the present embodiment. The communication device 101 includes a storage unit 301, a control unit 302, a function unit 303, an input unit 304, an output unit 305, a communication unit 306, and an antenna 307. Note that there may be multiple antennas.

The storage unit 301 is formed from one or more memories such as ROM and/or RAM and stores various information, such as a computer program for performing various operations described later and communication parameters for wireless communication. ROM and RAM are acronyms for read-only memory and random-access memory, respectively. Note that, besides memories such as ROM and RAM, the storage unit 301 may also use storage media such as a flexible disk, a hard disk, an optical disc, a magnetooptical disc, a CD-ROM, a CD-R, magnetic tape, a nonvolatile memory card, or a DVD. The storage unit 301 may also be provided with multiple memories or the like.

The control unit 302 is formed from one or more processors such as a CPU and/or an MPU for example, and controls the communication device 101 as a whole by executing a computer program stored in the storage unit 301. Note that the control unit 302 may also control the communication device 101 as a whole through cooperation between a computer program stored in the storage unit 301 and an operating system (OS). The control unit 302 also generates data and signals (wireless frames) to be transmitted in communication with other communication devices. Note that CPU is an abbreviation for central processing unit and MPU is an abbreviation for microprocessing unit. The control unit 302 may also be provided with multiple processors, such as multiple cores, and control the communication device 101 as a whole using the multiple processors.

The control unit 302 also controls the function unit 303 to execute prescribed processing such as wireless communication, imaging, printing, and projection. The function unit 303 is hardware with which the communication device 101 executes the prescribed processing.

The input unit 304 accepts various operations from a user. The output unit 305 provides various output to the user via a monitor screen and/or a speaker. In this context, the output provided by the output unit 305 may be visual presentation on the monitor screen, sound output by the speaker, vibration output, and/or the like. Note that both the input unit 304 and the output unit 305 may also be achieved as a single module, like a touch panel. The input unit 304 and the output unit 305 may each be integrated with, or discrete from, the communication device 101.

The communication unit 306 controls wireless communication conforming to the IEEE 802.11bn standard. The communication unit 306 may also control wireless communication conforming to other IEEE 802.11 series standards in addition to the IEEE 802.11bn standard, and also control wired communication such as wired LAN. The communication unit 306 controls the antenna 307 to transmit and receive signals for wireless communication generated by the control unit 302.

Note that if the communication device 101 supports the NFC standard, the Bluetooth standard, and/or the like in addition to the IEEE 802.11bn standard, the communication unit 306 may also control wireless communication in compliance with these communication standards. If the communication device 101 can execute wireless communication conforming to multiple communication standards, the communication device 101 may be configured to have a separate communication unit and antenna corresponding to each of the communication standards. The communication device 101 communicates data, such as image data, document data, and video data, with the communication device 102 via the communication unit 306. Note that the antenna 307 may be configured to be discrete from the communication unit 306, or may be combined with the communication unit 306 to form a single module.

The antenna 307 is capable of communication in the 2.4 GHz band, the 5 GHz band, and the 6 GHz band. There may be one or multiple antennas included in the communication device 101. The communication device 101 may also have a different antenna for each frequency band. If the communication device 101 has multiple antennas, the communication device 101 may also have a communication unit 306 corresponding to each antenna.

Note that the communication devices 102 and 103 each have a hardware configuration similar to that of the communication device 101.

### (Functional Configuration of Communication Device)

Fig. 4 illustrates an example of a block diagram of a functional configuration of the communication device 101 in the present embodiment. The following assumes that the communication device 101 is provided with a wireless LAN control unit 401. Note that the number of wireless LAN control units is not limited to one, and there may be multiple wireless LAN control units. The communication device 101 further includes a frame processing unit 402, a UI control unit 403, a storage unit 404, and a wireless antenna 405.

The wireless LAN control unit 401 is configured to include an antenna and a circuit for transmitting and receiving wireless signals with respect to another wireless LAN device, and a program that controls the antenna and the circuit. The wireless LAN control unit 401 executes wireless LAN communication control on the basis of frames generated by the frame processing unit 402 according to the IEEE 802.11 standards series.

The frame processing unit 402 processes wireless control frames transmitted and received by the wireless LAN control unit 401. The specifics of the wireless control generated and analyzed by the frame processing unit 402 may also be constrained by settings stored in the storage unit 404. The specifics may also be changed by user settings from the UI control unit 403. Generated frame information is sent to the wireless LAN control unit 401 and transmitted to a communication partner. Frame information received by the wireless LAN control unit 401 is passed to the frame processing unit 402 and analyzed.

The UI control unit 403 is configured to include hardware related to a user interface (UI), such as a touch panel or buttons for accepting operations with respect to the communication device 102 by a user, not illustrated, of the communication device 101, and a program that controls the hardware. Note that the UI control unit 403 also has, for example, a function for presenting information to the user via the display of images or the like, or via sound output or the like. The UI control unit 403 is also capable of displaying a settings screen pertaining to a Non-collocated AP MLD of the communication device 101, and accepting user operations with respect to the display. For example, a configuration can also be adopted to enable the user to specify, using a UI or the like, other AP MLDs with which to cooperate to form a Non-collocated AP MLD. In this case, the UI control unit 403 of the communication device 101 displays a settings screen for selecting several other AP MLDs that can form a Non-collocated AP MLD by cooperating with the communication device 101. The user may then be prompted to select, via the settings screen, which other AP MLDs to cooperate with to form a Non-collocated AP MLD.

The storage unit 404 may be formed by ROM, RAM, and/or the like that store a program and data with which the communication device 101 operates.

Note that the communication devices 102 and 103 each have a functional configuration similar to that of the communication device 101.

### (Connection Sequence)

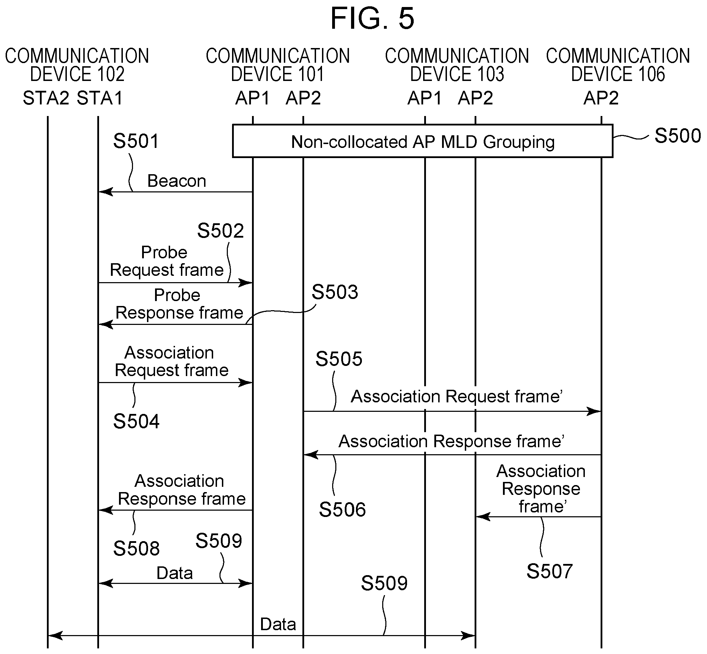

Fig. 5 is an example of processing whereby the communication device 102, via the communication device 101, connects (establishes a link) with each of the communication device 101 and the communication device 103 belonging to the Non collocated AP MLD 104, and executes communication. In this sequence, the communication device 101 and the communication device 102 share information pertaining to the Non-collocated AP MLD 104, whereby the communication device 102 connects (establishes links) with the communication devices 101 and 103. Note that in this sequence, a Beacon frame, a Probe Request frame, a Probe Response frame, an Association Request frame, and an Association Response frame are present, but in the description that follows, the word "frame" is omitted.

Note that in the present embodiment, STA1 and each AP1 in respective communication devices perform processing for communication via a first frequency channel (for example, 1ch in the 2.4 GHz band). STA2 and each AP2 perform processing for communication via a second frequency channel (for example, 36ch in the 5 GHz band).

The processing in this sequence is initiated in response to each of the communication devices being powered on. Alternatively, the communication device 102 may initiate the processing in response to being instructed by a user or an application to connect to another communication device. Alternatively, the communication device 102 and/or 103 may initiate the processing in response to the data volume of data to be communicated with a partner device having reached or exceeded a prescribed threshold.

First, the communication devices 101, 103, and 106 form a Group for forming a Non-collocated AP MLD (S500). As a method for forming the Group, the communication device 101 can, for example, query a preset destination for a Group and ascertain the AP MLDs included in the Group on the basis of a list obtained from the query. The communication device 101 may also send out requests to surrounding APs and use the responses as a basis for determining whether or not any of the APs belong to the same Non-collocated AP MLD. A configuration can also be adopted to enable a user to specify, using a UI or the like, a Group for forming an AP MLD.

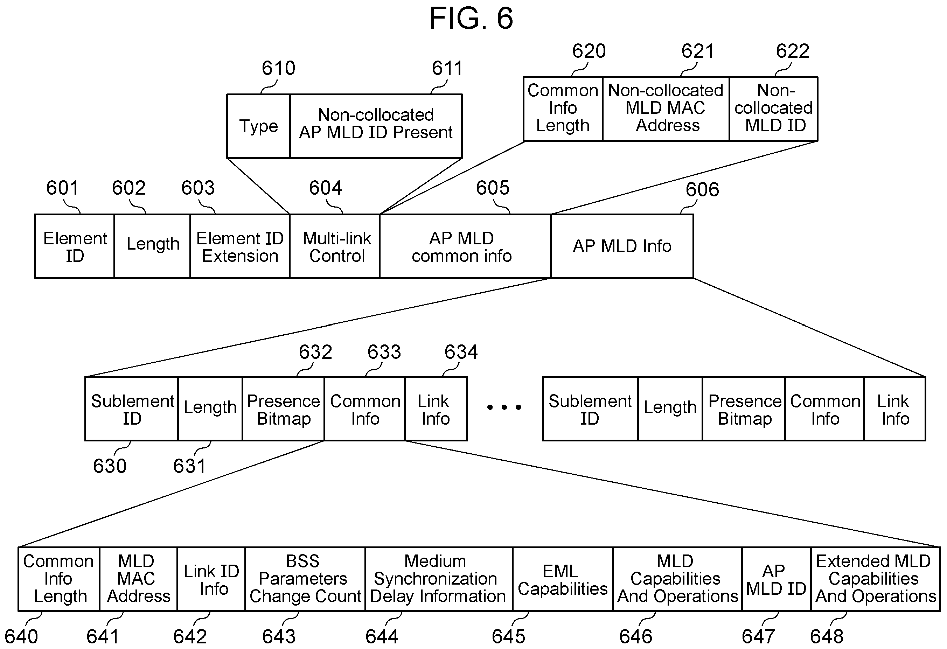

After the communication device 101 joins a Non-collocated AP MLD, the communication device 101 reports its own network information to surrounding STAs by transmitting a Beacon containing the network information in the first frequency channel (S501). Note that the communication device 101 notifies other communication devices of its own network information to surrounding STAs by reporting the Beacon periodically (for example, at intervals of 100 Time Units). In this context, the network information is specifically the transmission interval at which the communication device 101 transmits the Beacon, and the SSID of the communication device 101. In addition, the communication device 101 reports information pertaining to the Non-collocated AP MLD 104 to which the communication device 101 itself belongs by including the Non-collocated AP MLD Multi-Link Element illustrated in Fig. 6 described later as network information in the Beacon.

The communication device 102, upon receiving the Beacon of the communication device 102 transmitted in the first frequency channel, transmits a Probe Request in the first frequency channel to the communication device 101 to query the network information of the communication device 101 (S502). The Probe Request contains the SSID of the communication device 101. In addition, the communication device 102 may also request information pertaining to the Non-collocated AP MLD 104 to which the communication device 101 belongs by including the Non-collocated AP MLD Multi-Link Element illustrated in Fig. 6 described later in the Probe Request. In the present embodiment, it is assumed that the communication device 102 includes information for identifying the Non-collocated AP MLD 104, that is, an ID or a MAC Address, in the Probe Request. This allows the communication device 102 to request information pertaining to the Non-collocated AP MLD 104 (for example, information pertaining to other AP MLDs that belong to the Non-collocated AP MLD 104) from the communication device 101.

The communication device 101, upon receiving the Probe Request, transmits a Probe Response in the first frequency channel to the communication device 102 in response (S503). The communication device 101 at least includes, in the Probe Response, information about the Non-collocated AP MLD corresponding to the information for identifying the Non-collocated AP MLD included in the received Probe Request. In the present embodiment, it is assumed that the communication device 101 includes information pertaining to the communication device 101 and the communication device 103 as information about the Non-collocated AP MLD 104. Also, in the present embodiment, it is assumed that the Probe Response includes information for identifying at least the communication device 101 and the communication device 103, that is, an AP MLD ID or an AP MLD MAC Address corresponding to each communication device, as the information pertaining to the communication device 101 and the communication device 103.

If for example the Non-collocated AP MLD 104 is formed from several APs in addition to the communication devices 101, 103, and 106, the communication device 101 may also include information pertaining to all of the APs or include information pertaining to some of the APs in the Probe Response. The number of APs about which information is to be included in the Probe Response may also be determined on the basis of a result of querying the communication device 106. In response, the communication device 101 selects desired APs to connect with from among the multiple APs included in the Probe Response.

The communication device 102 acquires information about AP MLDs that belong to the Non-collocated AP MLD from the Probe Response, and determines which AP MLDs to request a connection with. In the present embodiment, it is assumed that the communication device 102 acquires information about AP MLDs that belong to the Non-collocated AP MLD 104 from the Probe Response, and determines the communication device 101 and the communication device 103 as the AP MLDs to request a connection with.

By performing the processing from S501 to S503 in this way, the communication devices 101 and 102 can exchange information pertaining to the Non-collocated AP MLD 104.

Next, the communication device 102 transmits an Association Request, which is a connection request, in the first frequency channel to the communication device 101 (S504). In this case, the communication device 102 may also request a connection with the communication device 103 and/or may also request a connection with the Non-collocated AP MLD 104 by including the Non-collocated AP MLD Multi-Link Element illustrated in Fig. 6 in the Asociation Request. Note that the communication device 102 may also determine the information to be transmitted in S504 on the basis of the information pertaining to a Non-collocated AP MLD acquired in S501 and/or S503. In the present embodiment, it is assumed that the communication device 102 selects connections with the communication device 101 and the communication device 103 from among the multiple AP MLDs that belong to the Non-collocated AP MLD 104 included in the Probe Response of S503, and requests connections with the communication device 101 and the communication device 103. Accordingly, it is assumed that the Association Request transmitted in S504 includes an identifier of the communication device 101 and an identifier of the communication device 103. With this arrangement, the communication device 102 indicates a request for connections with the communication device 101 and the communication device 103.

Next, the communication device 101, in a case of receiving the Association Request including the Non-collocated AP MLD Multi-Link Element, transmits all or some of the information in the Association Request to the communication device 106 (S505). Note that an AP1 having received an Association Request may also use a different AP2 to forward all or some of the Association Request to the communication device 106.

The communication device 106 receives the Association Request from the communication device 101 (S505). The communication device 106 then performs connection processing and authentication processing with respect to the communication device 102 as the Non-collocated AP MLD 104, on the basis of the information in the received Association Request. Note that in the present embodiment, it is assumed that the Non-collocated AP MLD 104 connects with the communication device 102 via the communication device 101 and the communication device 103.

The communication device 106 then transmits an Association Response to the communication device 101 in response to the Association Request (S506). The communication device 106 also transmits an Association Response containing information similar to that of the above Association Response to the communication device 103 (S507). Note that S506 and S507 are in no particular order. Either step may be performed first, or both steps may be performed simultaneously.

The communication device 101 then transmits an Association Response in the first frequency channel to the communication device 102 (S508). The Association Response transmitted at this point includes a Non-collocated AP MLD Multi-Link Element indicating the information pertaining to communication between the communication device 101 and the Non-collocated AP MLD 104 that was determined by the communication device 106.

The communication device 102, in response to receiving the Association Response, connects with the communication device 101 and with the communication device 103, and begins data communication (S509).

In the present embodiment, the communication device 102 connects with two communication devices by transmitting and receiving frames in one frequency channel, but is not limited thereto, and may also connect with three or more communication devices.

Also, the present embodiment describes a sequence by which the communication device 102 connects with the communication device 101 and the communication device 103 from a state in which a link has not yet been established between the communication devices 102 and 101, but the sequence is not limited thereto. The communication devices 102 and 101 may already be in a state in which a link is established, and the communication device 102 may add a connection with the communication device 103 in addition to the connection with the communication device 101. In this case, the communication device 102, which is a Non-AP MLD, may start from the processing in S504 if information about the Non-collocated AP MLD 104 has already been acquired.

Through the above, as illustrated in Fig. 5, the communication device 102 can connect with the Non-collocated AP MLD 104 via only communication with the communication device 101. Also, the communication device 102 can connect with the communication device 103 that belongs to the Non-collocated AP MLD 104 via only communication with the communication device 101.

Also, as described above, the communication device 102 can request information about the Non-collocated AP MLD 104 from the communication device 101 and thereby acquire information about the communication device 103 that belongs to the Non-collocated AP MLD 104. As an example, consider a case in which the communication device 102 is already connected with the communication device 101, and the communication device 102 wants to roam from the communication device 101 to the communication device 103. In this case, the communication device 102 acquires information about the Non-collocated AP MLD 104 and information about the communication device 103 from the communication device 101 with which a connection has already been established. This allows the communication device 102 to add a connection with the communication device 103, in addition to the connection with the communication device 101. At this time, the communication device 101 and the communication device 103 belong to the same Non-collocated AP MLD 104, and operate as a single logical AP MLD. For this reason, the communication device 102 can establish multiple links with the communication device 101 and the communication device 103 in parallel. In doing so, the communication device 102 can acquire information pertaining to the Non-collocated AP MLD. This allows for a connection with any AP among the APs that belong to the Non-collocated AP MLD. For this reason, the communication device 102 can communicate with an AP having a high signal strength, as appropriate, without the need for connection switching processing. Moreover, this mechanism can also be applied to cases in which a single logical AP MLD is actually formed from dozens or more APs, and a STA cannot communicate with all of the APs simultaneously. For example, in an initial setup sequence, the STA selects one or more APs of high signal strength near itself and establishes one or more links. Thereafter, in response to a weakening of the signal strength with a connected physical AP, link reconfiguration processing is performed to search for the presence of an AP with good signal strength among the multiple APs making up the logical MLD, and to add a link with an AP with good signal strength. The link reconfiguration processing is performed by having the STA transmit a Link Reconfiguration Request frame to an AP. The frame is an Action frame indicating that the STA requests the AP to reconfigure the link, and by storing an identifier of the Non-collocated AP MLD in the frame, the STA can indicate that the link with the MLD is to be reconfigured.

As an example, the following describes a case in which the communication device 102, which has already established a link with the communication device 101, adds a link with the communication device 103. In this situation, it is assumed that the communication device 102 has acquired information about the communication device 103 participating in the Non-collocated AP MLD 104 on the basis of at least one of the frames from S501 to S503 described above. The communication device 102 initiates the link reconfiguration processing on the basis of the radio wave strength of radio waves received from the communication device 103 having become higher than the radio wave strength of radio waves received from the communication device 101, or on the basis of communication with the communication device 103 having become available. The communication device 102 having initiated the link reconfiguration processing transmits a Link Reconfiguration Request frame to the communication device 101. The Link Reconfiguration Request frame includes an identifier of the Non-collocated AP MLD 104 and an identifier of the communication device 103 to request the addition of a link with the communication device 103. The Link Reconfiguration Request frame also includes a Non-collocated AP MLD Multi-Link Element described later. A Reconfiguration Operation Type field is also included in Link Info 634, which corresponds to information about the communication device 103 in the above element. More specifically, Link Info 634 includes an STA Control field, and the STA Control field is configured to include the Reconfiguration Operation Type field. The communication device 102 sets or stores 2 in the Reconfiguration Operation Type field to indicate a request for the addition of a link corresponding to Link Info 634. Note that in the case of a request for the removal of a link, the communication device 102 can set or store 3 in the Reconfiguration Operation Type field to indicate a request for the removal of a link corresponding to Link Info 634.

In this way, the communication device 102 can share information pertaining to the Non-collocated AP MLD with the communication device 101 and use the Link Reconfiguration Request frame described above to switch the primary communication partner to another AP with good signal strength, without interrupting communication. Note that it is also possible to disconnect, as appropriate, a link with an AP with which the signal strength has weakened, and in that case, it is likewise assumed that the Link Reconfiguration Request frame described above is used.

### (Non-collocated AP MLD Multi-Link Element)

Fig. 6 illustrates an example of a Non-collocated AP MLD Multi-Link Element in the present embodiment. The communication device 101 transmits the element by including the element in a management frame such as a Beacon frame, a Probe Response frame, or an Association Response frame, for example. Also, the communication device 102 transmits the element by including the element in a management frame such as a Probe Request frame or an Association Request frame, for example.

The Non-collocated AP MLD Multi-Link Element is configured to include Element ID 601, Length 602, Element ID Extension 603, Multi-Link Control 604, AP MLD Common Info 605, and AP MLD Info 606.

Element ID 601 and Element ID Extension 603 are identifiers for identifying an Information Element, and in the present embodiment, include identifiers indicating the Non-collocated AP MLD Multi-Link Element. Length 602 includes information indicating the data length of the Element. The information included in Multi-Link Control 604, AP MLD Common Info 605, and AP MLD Info 606 will be described later.

Multi-Link Control 604 is configured to include Type 610 and Non-collocated AP MLD ID Present 611. Type 610 is information indicating the type of the current element. Non-collocated AP MLD ID Present 611 is information indicating whether or not AP MLD Common Info 605 includes information pertaining to a Non-collocated AP MLD ID. For example, an included value of 1 indicates that information pertaining to a Non-collocated AP MLD ID is included in AP MLD Common Info 605, and an included value of 0 indicates that such information is not included in AP MLD Common Info 605.

AP MLD Common Info 605 is configured to include Common Info Length 620, Non-collocated AP MLD MAC Address 621, and Non-collocated AP MLD ID 622. Common Info Length 620 includes information indicating the data length of AP MLD Common Info 605. Non-collocated AP MLD MAC Address 621 specifies the MAC Address of the Non-collocated AP MLD pertaining to the information included in the element. Non-collocated AP MLD ID 622 includes information indicating an identifier of the Non-collocated AP MLD for which MLD information is stored in the element.

AP MLD Info 606 includes a number of subelements equal to the number of AP MLDs that belong to the Non-collocated AP MLD, with each subelement including information about a corresponding AP MLD. Each subelement is configured to include Subelement ID 630, Length 631, Presence Bitmap 632, Common Info 633, and Link Info 634. Subelement ID 630 includes information indicating an identifier for identifying each subelement. Length 631 includes information indicating the data length of the subelement. Presence Bitmap 632 indicates which fields are included in Common Info 633. Common Info 633 includes information common to the multiple links indicated in Link Info 634. Note that information included in Common Info 633 will be described later. Link Info 634 includes information pertaining to the links by which the AP MLD indicated in the subelement constructs a network, the number of pieces of information being equal to the number of links.

Common Info 633 is configured to include Common Info Length 640, MLD MAC Address 641, Link ID Info 642, BSS Parameters Change Count 643, Medium Synchronization Delay Information 644, EML Capabilities 645, MLD Capabilities And Operations 646, AP MLD ID 647, and Extended MLD Capabilities And Operations 648. Common Info Length 640 includes information indicating the data length of Common Info 633. MLD MAC Address 641 includes information indicating the MAC Address of the AP MLD indicated in the subelement. Link ID Info 642 includes information indicating a link ID of APs that belong to the AP MLD. BSS Parameters Change Count 643 includes information indicating a count of major changes to BSS parameters. Medium Synchronization Delay Information 644 includes a value obtained by subtracting 1 from the maximum number of TXOPs that a STA can attempt to initiate while a MediumSyncDelay timer is running on the STA. EML Capabilities 645 includes information pertaining to EML capabilities of the AP MLD indicated in the subelement. MLD Capabilities And Operations 646 includes information about capabilities and operations of the AP MLD indicated in the subelement. AP MLD ID 647 includes information indicating an ID of the AP MLD indicated in the subelement. Extended MLD Capabilities And Operations 648 includes information about capabilities and operations of the AP MLD, this information being different from that of MLD Capabilities And Operations 646.

Note that the information to be included in the Non-collocated AP MLD Multi-Link Element described above is not limited to the above. Each communication device may also be configured to include new information or be configured to remove unneeded information, as necessary. For example, the communication device 102 may be configured such that, in a case of requesting information about a Non-collocated AP MLD, at least a Non-collocated AP MLD ID or a Non-collocated AP MLD MAC Address that can be used to identify a Non-collocated AP MLD is included.

### (Process Flow)

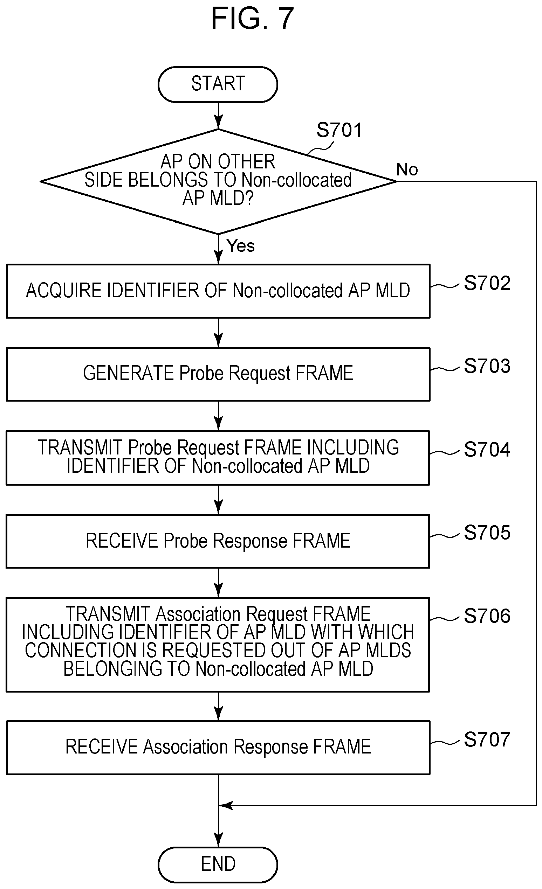

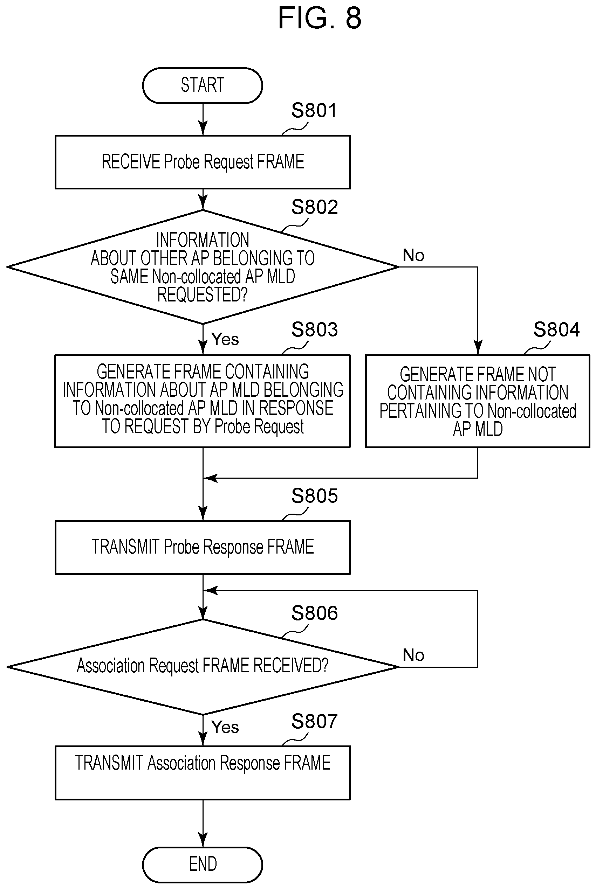

The following describes processing for requesting and providing Non-collocated AP MLD information using the Non-collocated AP MLD Multi-Link Element described above. The flowcharts illustrated in Figs. 7 and 8 illustrate processing to be executed by having the control unit 202 read out and execute a computer program stored in the storage unit 201 of the communication device 102 and the communication device 101, respectively.

Fig. 7 is a flowchart illustrating processing to be executed by having the control unit 202 read out and execute a computer program stored in the storage unit 201 of the communication device 102, which is a Non-AP MLD, in a case of connecting with a Non-collocated AP MLD. This flowchart illustrates an example of processing whereby the communication device 102 requests information pertaining to the Non-collocated AP MLD 104 from the AP MLD 101 in a case of acquiring information about the AP MLD 103 that belongs to the Non-collocated AP MLD 104. Also, this flowchart illustrates an example of processing whereby the communication device 102 makes connections with the communication device 101 and the communication device 103 as connections with the Non-collocated AP MLD 104.

Also, in the present embodiment, it is assumed that the communication device 102 requests information pertaining to the Non-collocated AP MLD 104 by transmitting a Probe Request frame including the Non-collocated AP MLD Multi-Link Element described above. Also, in the present embodiment, it is assumed that the communication device 102 requests a connection with the Non-collocated AP MLD 104 by transmitting an Association Request frame including the Non-collocated AP MLD Multi-Link Element described above.

First, the communication device 102 ascertains whether the communication device 101 is an AP MLD that belongs to a Non-collocated AP MLD (S701). It is assumed that the communication device 102 ascertains whether or not the communication device 101 belongs to a Non-collocated AP MLD on the basis of whether information pertaining to a Non-collocated AP MLD is included in a Beacon transmitted by the communication device 101. For example, it is ascertained that the communication device 101 is an AP MLD that belongs to a Non-collocated AP MLD on the basis of the Non-collocated AP MLD Multi-Link Element described above being included in a Beacon transmitted by the communication device 101.

If it is ascertained that the communication device 101 is not an AP MLD that belongs to a Non-collocated AP MLD (S701, No), the processing is ended.

If it is ascertained that the communication device 101 is an AP MLD that belongs to a Non-collocated AP MLD (S701, Yes), the wireless LAN control unit 401 of the communication device 102 acquires an identifier of the Non-collocated AP MLD, that is, an ID or the MAC Address of the Non-collocated AP MLD, to which the communication device 101 belongs (S702). In S702, it is assumed that the identifier of the Non-collocated AP MLD is acquired from a Beacon transmitted by the communication device 101, but the acquisition is not limited thereto. For example, if the identifier of the Non-collocated AP MLD has already been acquired, it is assumed that the wireless LAN control unit 401 of the communication device 102 acquires the identifier of the Non-collocated AP MLD from the storage unit 404.

Next, in S703, the frame processing unit 402 carries out generation of a Probe Request frame including a Non-collocated AP MLD Multi-Link Element. The Non-collocated AP MLD Multi-Link Element generated by the frame processing unit 402 in S703 has a value of 1 included in Non-collocated AP MLD ID Present 611, thus indicating that information pertaining to a Non-collocated AP MLD ID is included in AP MLD Common Info 605. Also, information indicating the MAC Addeess of the Non-collocated AP MLD 104 is stored in Non-collocated AP MLD MAC Address 621 of the element. Also, information indicating the ID of the Non-collocated AP MLD 104 is stored in Non-collocated AP MLD ID 622 of the element.

After generating the Probe Request in S703, the communication device 102 transmits the generated Probe Request to the communication device 101 (S704).

Next, the wireless LAN control unit 401 of the communication device 102 receives a Probe Response transmitted by the communication device 101 in response to the Probe Request transmitted in S704 (S705). Note that in the present embodiment, the communication device 102 determines to connect with each of the communication device 101 and the communication device 103 on the basis of information about these communication devices included in the Non-collocated AP MLD Multi-Link Element that is included in the received Probe Response.

Next, the communication device 102 transmits an Association Request, which includes information for identifying the Non-collocated AP MLD, including information about the communication device 101 and the communication device 103, and information about the communication devices with which a connection is requested (S706). Note that in the present embodiment, it is assumed that the communication device 102 indicates a partner device to connect with by including information (for example, the MLD ID or the MLD MAC Address) about the partner device to connect with in the element included in the Association Request.

An Association Response is then received in response to the Association Request (S707). The communication device 102 initiates data communication with the communication device 101 and the communication device 103 upon recognizing, in the Association Response, successful connections with the communication device 101 and the communication device 103.

In this way, the communication device 102 can transmit a Probe Request that includes a Non-collocated AP MLD Multi-Link Element including an identifier of a Non-collocated AP MLD, and thereby indicate to the communication device 101 that information about the Non-collocated AP MLD indicated by the identifier of the Non-collocated AP MLD is requested.

Also, the communication device 102 can transmit an Association Request that includes a Non-collocated AP MLD Multi-Link Element including an identifier of each AP MLD that belongs to the Non-collocated AP MLD, and thereby request a connection with each communication device.

The following uses Fig. 8 to describe a flow of processing by the communication device 101 upon receiving a Probe Request frame that includes a Non-collocated AP MLD Multi-Link Element.

First, the wireless LAN control unit 401 of the communication device 101 receives a Probe Request transmitted by the communication device 102 (S801). Next, the wireless LAN control unit 401 of the communication device 101 ascertains whether or not information about another AP MLD that belongs to the Non-collocated AP MLD is requested, on the basis of the ID or MAC Address for identifying the Non-collocated AP MLD included in the Probe Request frame received in S801, the inclusion of a Non-collocated AP MLD Multi-Link Element in the wireless frame, and the like (S802).

At this point, if it is ascertained that such information is not requested (S802, No), the frame processing unit 402 of the communication device 101 generates a Probe Response frame that does not include information pertaining to the Non-collocated AP MLD (S804). The wireless LAN control unit 401 then transmits the Probe Response generated in S805 to the communication device 102.

In S802, if it is ascertained that information about another AP MLD that belongs to the Non-collocated AP MLD is requested (S802, Yes), the frame processing unit 402 generates a Probe Respons frame that includes a Non-collocated AP MLD Multi-Link Element storing information corresponding to the identification information of the Non-collocated AP MLD included in the received Probe Request (S803). Then, in S805, the wireless LAN control unit 401 transmits the Probe Respons frame generated in S803 to the communication device 102.

Next, the communication device 101 determines whether an Association Request is received from the communication device 102 (S806). If an Association Request is not received, the communication device 101 determines No in the current step, and performs the processing in the current step again. Note that if a prescribed time has elapsed since the transmission of the Probe Response in S805 but Yes has not been determined in the current step, the communication device 101 notifies the user of an error and ends the processing of the current flow. On the other hand, if an Association Request is received, the communication device 101 determines Yes in the current step, and performs the processing in S807.

Next, the communication device 101 transmits an Association Response in response to the Association Request (S807). Note that the Association Response transmitted at this point includes a Non-collocated AP MLD Multi-Link Element that includes information pertaining to the acceptance or refusal of a connection between the communication device 102 and the AP MLD with which a connection was requested in the Association Request received in S806.

In this way, the communication device 101 can use the Non-collocated AP MLD Multi-Link Element described above to provide the communication device 102 with information pertaining to an AP MLD that belongs to the Non-collocated AP MLD, as requested by the communication device 102. Also, the communication device 101 can transmit an Association Response that includes a Non-collocated AP MLD Multi-Link Element including an identifier of each AP MLD that belongs to the Non-collocated AP MLD, and thereby indicate the acceptance or refusal of a connection with each communication device.

### <Other Embodiments>

In the present embodiment described above, the names of the fields described above are not limited to those given above insofar as the content of the information included in the fields is similar.

Also, all or at least a portion of the flowcharts illustrated in Figs. 7 and 8 may also be achieved by hardware provided in each communication device. In the case of achievement by hardware, for example, a prescribed compiler may be used to generate a dedicated circuit on an FPGA from a computer program for achieving each step, and the dedicated circuit may then be used. FPGA is an acronym for field-programmable gate array. Also, a gate array circuit may be formed in a manner similar to an FPGA to achieve the processing as hardware. The processing may also be achieved by an application-specific integrated circuit (ASIC).

The present invention is also achievable by a process of supplying a program for achieving one or more functions of the embodiment described above to a system or a device via a network or a storage medium, and having one or more processors in a computer of the system or device read out and execute the program. The present invention is also achievable by a circuit (for example, an ASIC) that achieves the one or more functions.

Also, the disclosure of the embodiments described above includes the following configurations.

### (Configuration 1)

A communication device, being a Multi-Link Device capable of establishing multiple parallel links with another communication device via respectively different frequency channels, characterized by comprising:
a communicating means that communicates a prescribed wireless frame with a first Multi-Link Device different from the Multi-Link Device; and
an establishing means that establishes a link with the first Multi-Link Device, wherein
the prescribed wireless frame communicated by the communicating means includes a prescribed element that includes an identifier of a logical Multi-Link Device formed by cooperation between at least the first Multi-Link Device and a second Multi-Link Device different from the Multi-Link Device.

### (Configuration 2)

The communication device according to configuration 1, characterized in that
the prescribed element further includes an identifier of the first Multi-Link Device and an identifier of the second Multi-Link Device.

### (Configuration 3)

The communication device according to either one of configuration 1 or configuration 2, characterized in that
the identifier is a MAC Address of a Multi-Link Device identified by the identifier.

### (Configuration 4)

The communication device according to any one of configuration 1 to configuration 3, characterized in that
each of the first Multi-Link Device and the second Multi-Link Device is an access point multi-link device capable of constructing a network, and
each of the identifier of the first Multi-Link Device and the identifier of the second Multi-Link Device is an AP

### MLD ID.

### (Configuration 5)

The communication device according to any one of configuration 1 to configuration 4, characterized in that
the Multi-Link Device is a non-access point multi-link device capable of joining a network constructed by the first Multi-Link Device, and
the Multi-Link Device requests information pertaining to the second Multi-Link Device by transmitting a prescribed frame including a prescribed element that includes the identifier of a logical Multi-Link Device.

### (Configuration 6)

The communication device according to any one of configuration 1 to configuration 5, characterized in that
the prescribed frame is a Probe Request frame,
the communicating means transmits, to the first Multi-Link Device, the Probe Request frame including a prescribed element that includes an identifier of the logical Multi-Link Device, and
the communicating means receives the Probe Response frame transmitted by the first Multi-Link Device in response to the Probe Request frame.

### (Configuration 7)

The communication device according to configuration 6, characterized in that
the Probe Response frame includes an identifier of the logical Multi-Link Device and an identifier of the second Multi-Link Device.

### (Configuration 8)

The communication device according to any one of configuration 1 to configuration 7, characterized in that
the establishing means is capable of establishing a first link with the first Multi-Link Device and a second link with the second Multi-Link Device in parallel, and
in a case of establishing a first link with the first Multi-Link Device and a second link with the second Multi-Link Device in parallel, the communicating means transmits, to the first Multi-Link Device, an Association Request frame including an identifier of the first Multi-Link Device and an identifier of the second Multi-Link Device.

The present invention is not limited to the embodiment described above, and various changes and modifications are possible without departing from the spirit and scope of the present invention. Accordingly, the following claims are attached to make public the scope of the invention.

This application claims the benefit of Japanese Patent Application No. 2023-191187 filed November 8, 2023, which is hereby incorporated by reference herein in its entirety.

### Reference Signs List

100, 105 network
101, 103, 106 AP MLD
102 non-AP MLD

## Claims

1. A communication device, being a Multi-Link Device capable of establishing multiple parallel links with another communication device via respectively different frequency channels, **characterized by** comprising:
a communicating means that communicates a prescribed wireless frame with a first Multi-Link Device different from the Multi-Link Device; and
an establishing means that establishes a link with the first Multi-Link Device, wherein
the prescribed wireless frame communicated by the communicating means includes a prescribed element that includes an identifier of a logical Multi-Link Device formed by cooperation between at least the first Multi-Link Device and a second Multi-Link Device different from the Multi-Link Device.

2. The communication device according to claim 1, **characterized in that**
the prescribed element further includes an identifier of the first Multi-Link Device and an identifier of the second Multi-Link Device.

3. The communication device according to either one of claim 1 or claim 2, **characterized in that**
the identifier is a MAC Address of a Multi-Link Device identified by the identifier.

4. The communication device according to either one of claim 1 or claim 2, **characterized in that**
each of the first Multi-Link Device and the second Multi-Link Device is an access point multi-link device capable of constructing a network, and
each of the identifier of the first Multi-Link Device and the identifier of the second Multi-Link Device is an AP MLD ID.

5. The communication device according to claim 1, **characterized in that**
the Multi-Link Device is a non-access point multi-link device capable of joining a network constructed by the first Multi-Link Device, and
the Multi-Link Device requests information pertaining to the second Multi-Link Device by transmitting a prescribed frame including a prescribed element that includes the identifier of a logical Multi-Link Device.

6. The communication device according to claim 1, **characterized in that**
the prescribed frame is a Probe Request frame,
the communicating means transmits, to the first Multi-Link Device, the Probe Request frame including a prescribed element that includes an identifier of the logical Multi-Link Device, and
the communicating means receives the Probe Response frame transmitted by the first Multi-Link Device in response to the Probe Request frame.

7. The communication device according to claim 6, **characterized in that**
the Probe Response frame includes an identifier of the logical Multi-Link Device and an identifier of the second Multi-Link Device.

8. The communication device according to claim 1, **characterized in that**
the establishing means is capable of establishing a first link with the first Multi-Link Device and a second link with the second Multi-Link Device in parallel, and
in a case of establishing a first link with the first Multi-Link Device and a second link with the second Multi-Link Device in parallel, the communicating means transmits, to the first Multi-Link Device, an Association Request frame including an identifier of the first Multi-Link Device and an identifier of the second Multi-Link Device.

9. A control method for a communication device, being a control method for a Multi-Link Device capable of establishing multiple parallel links with another communication device via respectively different frequency channels, **characterized by** comprising:
a communicating step for communicating a prescribed wireless frame with a first Multi-Link Device different from the Multi-Link Device; and
an establishing step for establishing the plurality of links with the first Multi-Link Device, wherein
the prescribed wireless frame communicated in the communicating step includes a prescribed element that includes an identifier of a logical Multi-Link Device formed by cooperation between at least the first Multi-Link Device and a second Multi-Link Device different from the Multi-Link Device.

10. A program that causes, when the program is executed, a computer to perform the control method for a communication device according to claim 9.
